# EUROPÄISCHE PATENTSCHRIFT

(11) **EP 0 788 822 B1**
(45) Veröffentlichungstag und Bekanntmachung des Hinweises auf die Patenterteilung: **03.09.2003**
(21) Anmeldenummer: 97106607.1
(22) Anmeldetag: 19.12.1994
(51) Int. Cl.: B01D 24/18

(54) **Flüssigkeitsfilter**
Filter for liquids
Filtre pour liquides

(30) Priorität: 28.12.1993 DE 9320038 U; 26.01.1994 DE 9401249 U
(43) Veröffentlichungstag der Anmeldung: 13.08.1997
(62) Teilanmeldung aus: 95903243.4
(73) Patentinhaber: MTS-PRODUKTE GmbH, 40885 Ratingen (DE)
(72) Erfinder: Matea, Franz, 50002 Hadec-Kralove (CZ)
(74) Vertreter: Vomberg, Friedhelm, Dipl.-Phys.

(56) Entgegenhaltungen:
- WO-A-91/12061
- DE-A- 1 767 705
- DE-U- 9 103 053
- FR-A- 1 553 023
- GB-A- 2 003 739

## Beschreibung

Die Erfindung betrifft einen Flüssigkeitsfilter.

Flüssigkeitsfilter, insbesondere Wasserfilter für Schwimmbäder oder dgl., bestehend aus einem geschlossenen Behälter mit einem Flüssigkeitseinlass und einem Flüssigkeitsauslass, zwischen denen mindestens ein Filterkörper oder mindestens eine Filtermaterialschüttung angeordnet ist, sind nach dem Stand der Technik bekannt.

in das Schwimmbeckenwasser gelangen grobe Verunreinigungen, Trübstoffe, kolloide Stoffe sowie Mirkoorganismen. Durch Filtration, beispielsweise mit Sand, Anthrazit, Dolomit, Lavakies, Silikaten oder Aktivkohle können grobe Verunreinigungen und Trübstoffe zurückgehalten werden. Um die kolloiden sowie zum Teil auch echt gelösten Stoffe in eine filtrierfähige Form zu überführen, werden zum Teil Flockungsmittel eingesetzt, die ebenfalls in Filtern abgetrennt werden.

Um eine ausreichende Filtration zu gewährleisten, sind bestimmte Schichthöhen des Filtermaterials vorgeschrieben bzw. zweckentsprechend vorzusehen, z.B. bei Sand als Filtermaterial eine Schichthöhe von mehr als 1,2 m bei geschlossenen Filtergehäusen.

Die nach dem Stand der Technik bekannten Flüssigkeitsfilter bestehen aus zwei Halbschalen, die durch einen Spannring gehalten werden. Über einen Flüssigkeitseinlass und einen Flüssigkeitsauslass wird Wasser über ein Rohrsystem des Behälters gepumpt, der zur Filtration mit Kies oder Sand oder ähnlichen Filtermitteln gefüllt ist. Der gesamte Rohrinnenaufbau sowie die Halterungselemente für Siebe oder ähnliches sind sehr aufwendig.

Die DE-U-91 03 053 beschreibt einen Filter mit einem Kartuschengehäuse und einem mit diesem lösbar verbundenen Anschlussstück mit Anschlüssen für den Ein lass und Auslass des zu filtrierenden Mediums, dessen Strom in dem Kartuschengehäuse mindestes einmal umgelenkt wird. In dem Kartuschengehäuse ist mindestens eine Filterkartusche angeordnet, in deren aus einer allgemein zylindrischen Gehäusewand mit endabschnittseitig angeordneten Abdeckplatten bestehenden Kartuschengehäuse mindestens eine Filterkammer mit Filtermaterial ausgebildet ist, wobei in mindestens einer Abdeckplatte mindestens eine Mediumeinlassöffnung und/oder eine Mediumauslassöffnung ausgebildet ist. Durch mindestens eine Trennwand in dem Kartuschengehäuse sind mindestens zwei Filterkammern mit Filtermaterial ausgebildet, die koaxial zueinander angeordnet und nacheinander von dem Medium durchströmbar sind, wobei die der Abdeckplatte mit der Mediumeiniassöffnung abgewandte weitere Abdeckplatte entweder als Verschlussplatte des Kartuschengehäuses oder als mindestens eine Durchbrechung aufweisendes Gehäuseverbindungsstück zur Halterung eines weiteren Kartuschengehäuses ausgebildet ist. In den Filterkammern können unterschiedliche Filtermaterialien angeordnet sein. So kann die auslassseitige Filterkammer als innen hohle Filterkerze aus feinstporigem Keramikrohr ausgebildet sein, dessen Außenmantel eine Trennwand bildet. In der Filterkerze kann auch ein Innenfilterrohr aus feinstporiger Keramik oder einem mediumundurchlässigen Rohrmantel angeordnet sein, das mit der auslassseitigen Durchbrechung verbunden ist.

In der FR-A-1 553 023 wird ein Filter beschrieben, bei dem in einem ringförmigen Gittergehäuse eine Sandschüttung und zusätzlich in einem zentralen Fallrohr eine Aktivkohleschüttung enthalten sein soll, über der eine Materialschicht, die kesselsteinbildende Stoffe bindet, angeordnet ist.

Es ist Aufgabe der vorliegenden Erfindung, den Aufbau des Flüssigkeitsfilters zu vereinfachen, ohne dass bei der Filtration Qualitätseinbußen hingenommen werden müssen.

Diese Aufgabe wird durch den Flüssigkeitsfilter nach Anspruch 1 gelöst.

Eine Weiterbildung der Erfindung ist in Ansprüch 2 beschrieben.

In den oder die auswechselbaren Aktivkohlekartuschenfilter strömt radial das Wasser ein, das über ein perforiertes Innenrohr des Aktivkohlefilters dem Flüssig keitsauslass zuführbar ist.

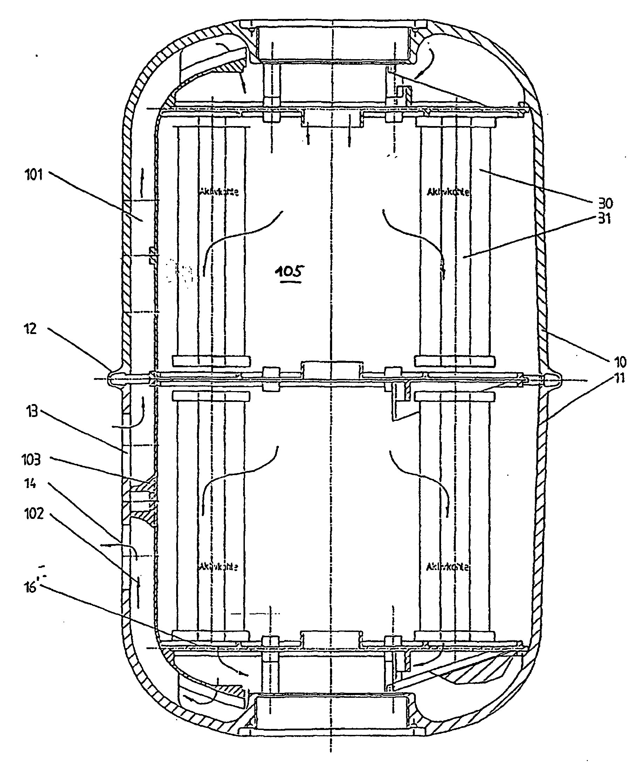

Ein Ausführungsbeispiel der Erfindung ist in der Zeichnung dargestellt.

Der dargestellte Flüssigkeitsfilter besteht aus jeweils spritzgegossenen Teilen, nämlich einem Oberteil 10 und einem Unterteil 11, die über einen Spannring 12 zusammengehalten werden. Das Unterteil 11 weist einen Einlass 13 sowie einen Auslass 14 auf, die über eine Wanddurchbrechung zu jeweiligen Kanälen 101 und 102 führen, die im einfachsten Fall aus zwei zueinander parallelen, senkrecht auf der Behälterinnenwand stehenden Seitenwänden und einer parallel zur Behälterinnenwand liegenden Abdeckung bestehen, die aufgeklemmt oder aufgeschraubt ist. Der mit dem Flüssigkeitseinlass 13 verbundene Kanal 101 besitzt einen unteren Abschluss 103, so dass eingepumptes Wasser in dem Kanal nach oben strömt. Der Kanal 101 endet im oberen Behälterbereich und ist mit einer Abdeckung als Verteiler verbunden. Diese Abdeckung kann Schlitze, Durchbrechungen oder ähnliche wasserdurchlässige Geometrien aufweisen. Unterhalb des Verteilers ist ein mit einer Sand- und/oder Kiesschüttung gefüllter Behälterinnenraum 105 vorgesehen. Auch im unteren Bereich wird der Kanal 102 durch eine mit Schlitzen, Bohrungen oder anderen Öffnungen versehenen Abdeckung gegen den Durchtritt von Filtermaterial in den Kanal 102 abgeschirmt. Der Kanal 102, der wie der Kanal 101 aufgebaut ist, wird nach oben hin durch eine Trennung 103 begrenzt. Der Flüssigkeitsverlauf ist anhand von Pfeilen schematisch dargestellt. Der Deckel 10 sowie das Bodenteil 11 haben einen kreisförmigen Querschnitt und sind lösbar aufeinandergesetzt, wobei an der Aufsetzstelle jeweils äußere Ringwülste mit dem Spannring 12 fixiert werden.

In dem Behälterinnenraum 105 befinden sich zusätzlich zu einer Kiesschüttung Aktivkohlekartuschen 30 mit einem innen angeordneten Fallrohr 31, worüber dort abströmende Flüssigkeit in den Ablaufkanal 102 gelangt.

## Patentansprüche

1. Flüssigkeitsfilter, insbesondere Wasserfilter für Schwimmbäder oder dergleichen, bestehend aus einem geschlossenen Behälter mit einem Flüssigkeitseinlaß (13) und einem Flüssigkeitsauslaß (14),
wobei der Behälter mit einer Sand- und/oder Kiesschüttung gefüllt ist und in dieser Schüttung mindestens ein auswechselbarer Aktivekohle-Kartuschenfilter (30) mit einem innen angeordneten Fallrohr (31), worüber die dort abströmende Flüssigkeit in einen mit dem Flüssigkeitskeitsauslaß (14) verbundenen Ablaufkanal (102) gelangt, vorgesehen ist.

2. Flüssigkeitsfilter nach Anspruch 1, **dadurch gekennzeichnet, daß** der Behälterinnenraum mindestens einen auswechselbaren Kartuschenfilter enthält, in den oder in die radial das Wasser einströmt und über ein perforiertes Innenrohr dem Flüssigkeitsauslaß zuführbar ist.

## Claims

1. Filter for liquids, in particular filter for swimming pool water or similar, said filter consisting of a closed receptacle with a liquid inlet (13) and a liquid outlet (14), whereby the receptacle is filled with a sand or gravel bulk in which bulk at least one exchangeable activated carbon coal cartouche filter (30) is provided having a down pipe inside arranged, through which the fluid flowing out there runs in an outlet channel (102) connected with the liquid outlet (14).

2. Filter for liquids according to claim 1, **characterised in that** the receptacle inner room comprises at least one exchangeable cartouche filter into which the water streams radially and can be guided via a perforated inner tube to the liquid outlet.

## Revendications

1. Filtre pour liquides, en particulier filtre d'eau pour des piscines ou semblable, se composant d'un réservoir fermé avec une entrée de liquide (13) et une sortie de liquide (14), le réservoir étant rempli d'un lit de sable et/ou de gravier, et dans ce lit étant prévu au moins un filtre-cartouche échangeable à charbon actif (30) avec un tuyau de descente (31) disposé à l'intérieur par lequel le liquide y s'écoulant arrive dans un canal d'écoulement (102) relié à la sortie de liquide (14).

2. Filtre pour liquides selon la revendication 1, **caractérisé par le fait que** l'intérieur du réservoir contient au moins un filtre-cartouche échangeable dans lequel ou dans lesquels l'eau arrive radialement et peut être amenée à la sortie de liquide par un tuyau intérieur perforé.
